# EUROPÄISCHE PATENTANMELDUNG

(11) **EP 2 298 534 A2**
(43) Veröffentlichungstag der Anmeldung: **23.03.2011**
(21) Anmeldenummer: 10170877.4
(22) Anmeldetag: 27.07.2010
(51) Int. Cl.: B29C 49/78

(54) **Verfahren und Vorrichtung zum Blasformen von Behältern**

(30) Priorität: 10.09.2009 DE 102009041013
(71) Anmelder: Krones AG, 93073 Neutraubling (DE)
(72) Erfinder: Brunner, Andreas, 93089 Aufhausen (DE); Blochmann, Erik, 93073 Neutraubling (DE); Geltinger, Florian, 84088 Neufahrn (DE)
(74) Vertreter: Grünecker, Kinkeldey, Stockmair & Schwanhäusser Anwaltssozietät

(57) **Zusammenfassung**

Bei einem Verfahren zum Blasformen von Behältern (40) in Blasformen (B) einer mit Rückgewinnung von Luft aus den Blasformen (B) betriebenen Vorrichtung (M), wobei aufeinanderfolgend in einer Vorblasstufe (28) mit einem niedrigen Druck (P1) und mindestens zwei weiteren Blasstufen (29, 30, 30') mit jeweils höheren Drücken (Pi, P2, P2') gearbeitet und nachfolgend in einer Rückgewinnungsphase (32) mit mehreren Druckstufen Luft aus der jeweiligen Blasform eingespeist wird, wird Luft aus der Blasform (B) vorrangig gegenüber einer Einspeisung zumindest in das der auf die Vorblasstufe (28) folgenden Druckstufe (29) zugeordnete Volumen (9) zuerst in das der Vorblasstufe (28) zugeordnete Volumen (8) eingespeist. Die Vorrichtung weist eine Blassteuerung (CU) und eine Überwachungseinrichtung für den Druck in dem Volumen (8) auf, wobei die Blassteuerung (CU) eine Programmsektion (S) zum vorrangigen Einspeisen von Luft zuerst in das Volumen (8) und, gegebenenfalls zum Begrenzen des Drucks in dem Volumen (8) auf ein Mehrfaches des Drucks (P1) auf.

## Beschreibung

Die Erfindung betrifft ein Verfahren gemäß Oberbegriff des Anspruchs 1 sowie eine Vorrichtung gemäß Oberbegriff des Anspruchs 11.

Bei dem aus DE 10 2004 014 653 A bekannten Verfahren wird in der Rückgewinnungsphase Luft aus der jeweiligen Blasform zuerst in ein einer höheren Blasstufe als der Vorblasstufe zugeordnetes Volumen eingespeist, und erst nachfolgend aus diesem Volumen mit Druckbegrenzung auf den Druck für die Vorblasstufe das der Vorblasstufe zugeordnete Volumen gespeist. Die auf die Vorblasstufe folgende höhere Blasstufe erstreckt sich bis auf einen relativ hohen Druck von etwa 30 bar, während die höchste Blasstufe bis zu einem sehr hohen Druck von etwa 40 bar geführt wird. Die Luft aus der jeweiligen Blasform wird nur in der höchsten Druckstufe der Rückgewinnungsphase bis zu einem Druck annähernd entsprechend dem Druck der auf die Vorblasstufe folgenden Blasstufe in das Volumen eingespeist, während in der nächstfolgenden Druckstufe der Rückgewinnungsphase ein Arbeitsluftspeicher gespeist wird. Abgesehen davon, dass der hohe Druck der höchsten Blasstufe einen unerwünscht hohen Energiebedarf bedingt, ist der für die Vorblasstufe nutzbare, nur nachrangig eingespeiste Druck unzweckmäßig niedrig. Da während des Blasprozesses unvermeidbar durch die Einspeisungen und die Vorblasstufen Druckschwankungen im der Vorblasstufe zugeordneten Volumen auftreten, und das Druckpotential im der Vorblasstufe zugeordneten Volumen gering ist, gibt es in der Vorblasstufe außerordentlich unerwünschte Fluktuationen. Die Vorblasstufe bestimmt im Vorformling bereits endgültig die Materialverteilung, gegebenenfalls abhängig vom Temperaturprofil, die sich bei den nachfolgenden Blasstufen kaum mehr verändert. Aus den erwähnten Fluktuationen resultieren dann eine unbefriedigende Konstanz der Volumina der blasgeformten Behälter und/oder ungleichmäßige einzelne Segmentgewichte der Behälter. Mit einem nur niedrigen Druckpotential im der Vorblasstufe zugeordneten Volumen kann ferner die Luftströmung während der Vorblasstufe unterkritisch werden. Somit kann auch der Vorblasstufen-Volumenstrom wegen der unter anderem durch die Einspeisungen während der Rückgewinnungsphase entstehenden Druckschwankungen im der Vorblasstufe zugeordneten Volumen nicht exakt reproduzierbar eingestellt werden. Im Resultat lässt sich wegen der auftretenden Fluktuationen in der Vorblasstufe eine gleichbleibende Qualität der blasgeformten Behälter nicht gewährleisten.

Bei einem aus EP 1 9 22 206 A bekannten Verfahren wird in der Rückgewinnungsphase zunächst ein für mehrere Verbraucher gemeinsames Volumen vorrangig gespeist, indem darin ein relativ niedriger Druck von etwa 17 bar aufgebaut wird, und wird erst nachrangig das der Vorblasstufe zugeordnete Volumen gespeist, in welchem zwangsweise nur ein sehr niedriges Druckpotential für die Vorblasstufe entsteht, aus welchem die obengenannten Nachteile resultieren. Auch bei diesem bekannten Verfahren wird die auf die Vorblasstufe folgende Blasstufe bis zu einem relativ hohen Druck von etwa 18 bar durchgeführt, während in der höchsten Blasstufe mit einem einen extrem hohen Energiebedarf bedingenden Druck bis zu 40 bar gearbeitet wird.

Bei einem aus DE 10 2007 015 105 A bekannten Verfahren mit kaskadenartigem Druckaufbau wird zum Druckaufbau im Volumen für die Vorblasstufe in der Rückgewinnungsphase die niedrigste Druckstufe bei der Entlastung der Blasform verwendet, was zu einem relativ niedrigen Druckpotential im der Vorblasstufe zugeordneten Volumen mit den oben angegebenen Nachteilen führen kann. Wird die Vorblasstufe als erster Druckaufbauschritt der Fertigblasstufe ausgebildet, dann ist die Vorblasstufe in den kaskadenartigen Druckaufbau der Fertigblasstufe integriert. Konkret wird der Vorblasdruck aus einem Einzelspeicher aufgebaut, und wird dabei zum Auffüllen des Vorblasdruckes der Anteil des Druckgases aus der Blasform verwendet, der aus der untersten Entlastungsstufe stammt. Ist hingegen die Vorblasstufe wie die Fertigblasstufe jeweils mit mehreren Druckaufbauschritten aus mehreren separaten Speichern ausgebildet, dann dienen die untersten Druckentlastungsschritte der Fertigblasstufe zum Druckaufbau der Vorblasstufe.

Der Erfindung liegt die Aufgabe zugrunde, ein Verfahren und eine Vorrichtung der eingangs genannten Art anzugeben, mit denen eine gleichbleibende hohe Qualität der blasgeformten Behälter, insbesondere Kunststoffflaschen, gewährleistbar ist.

Die gestellte Aufgabe wird mit den Merkmalen des Patentanspruchs 1 und den Merkmalen des Patentanspruchs 11 gelöst.

Indem das Volumen für die Vorblasstufe als erstes und vor einem Volumen für eine höhere Blasstufe, oder jedenfalls zeitlich vor einem Volumen einer noch höheren Blasstufe gespeist wird, ist die Wahrscheinlichkeit von Druckschwankungen beim Vorblasen außerordentlich gering oder nicht mehr existent, was hohe Konstanz in den Volumina der blasgeformten Behälter und der einzelnen Segmentgewichte der Behälter sicherstellt.

Bei einer bevorzugten Verfahrensvariante wird in der Rückgewinnungsphase das Volumen für die Vorblasstufe zeitlich gesehen vor einem Volumen einer höheren Blasstufe gespeist. Bei Beginn der Speisung des Volumens für eine höhere Blasstufe kann die Speisung des Volumens für die Vorblasstufe weiterhin andauern bzw. über einen bestimmten Zeitraum gleichzeitig erfolgen.

Wenn verfahrensgemäß das der Vorblasstufe zugeordnete Volumen in der Rückgewinnungsphase und dort nur in wenigstens einer relativ hohen Druckstufe vorrangig mit Luft aus der Blasform gespeist wird, ehe oder nachdem zumindest ein weiteres Volumen gespeist wird, lässt sich in dem der Vorblasstufe zugeordneten Volumen ein günstiges Druckpotential schaffen, z.B. ein relativ hoher Druck im Vergleich zum während der Vorblasstufe in der Blasform bzw. dem Vorformling aufgebauten Druck, so dass sich die unvermeidlichen Druckschwankungen in dem der Vorblasstufe zugeordneten Volumen nicht mehr oder allenfalls stark gemindert in der Vorblasstufe auswirken können. Dank des hohen Druckpotentials bzw. hohen Drucks kann eine relativ klein bemessene Drossel verwendet werden, über die in der Vorblasstufe gearbeitet wird, so dass der Vorblasstufen-Druck und die Vorblasmenge exakt reproduzierbar sind und vor allem für alle Vorblasstufen weitestgehend konstant bleiben. Im Resultat wird durch untereinander gleiche Vorblasstufen eine gleichbleibende Qualität der blasgeformten Behälter gewährleistet. Gleichermaßen kann auch das Volumen für die auf die Vorblasstufe folgende Blasstufe vorrangig zu einem Volumen für eine noch höhere Blasstufe gespeist werden, um den Vorformling mit hoher Konstanz weiter zu verformen.

Definitionsgemäß ist mit Luft aus der Blasform diejenige Luft gemeint, die aus dem in der Blasform befindlichen Behälter stammt.

In der Vorrichtung wird mit dem Kunstgriff, sozusagen die zum Speisen eines weiteren Volumens einer höheren Blasstufe herangezogene Druckstufe in der Rückgewinnungsphase zum Höheren überspringen, indem Luft aus der Blasform in das der Vorblasstufe zugeordnete Volumen vorrangig eingespeist wird, dann in der Vorblasstufe mit von Druckvariationen weitestgehend unabhängigen, gleichbleibenden Verhältnissen gearbeitet, um eine konstant hohe Endqualität zu erzielen. Die Programmsektion der Blassteuerung stellt in Zusammenarbeit mit der Drucküberwachungseinrichtung im der Vorblasstufe zugeordneten Volumen stets ein ausreichend hohes Druckpotential her, das ein gleichbleibendes Qualitätsniveau in allen Vorblasstufen sicherstellt. Wenn die Programmsektion der Blassteuerung die Lufteinspeisung in ein weiteres Volumen, z.B. für wenigstens eine weitere höhere Blasstufe, erst nachrangig steuert, hat dies auf das Druckpotential im der Vorblasstufe zugeordneten Volumen keinen Einfluss. Da das Druckpotential im der Vorblasstufe zugeordneten Volumen bzw. das dortige Druckniveau dank der vorrangigen Einspeisung ausreichend groß ist, braucht in der Vorblasstufe nicht mit einer unzweckmäßig großen Drossel gearbeitet zu werden, sondern kann für den Vorblasstufen-Druck und die Vorblasstufen-Luftmenge eine optimal kleine Drossel gewählt werden, so dass die Wahrscheinlichkeit einer unterkritischen Strömung sehr gering wird oder sogar entfällt.

Bei einer zweckmäßigen Verfahrensvariante wird Luft aus der jeweiligen Blasform in das der Vorblasstufe zugeordnete Volumen zumindest während der Rückgewinnungsphasen-Druckstufe zu dem höchsten niedrigen Druck eingespeist, bevor Luft auch in zumindest ein weiteres Volumen eingespeist wird. Vorzugsweise wird, falls mit mehreren Blasstufen und mehreren Entlastungs-Druckstufen gearbeitet wird, alternativ während der Rückgewinnungsphasen-Druckstufe zu dem nächstniedrigeren Druck Luft in das Volumen für die Vorblasstufe eingespeist. Vorzugsweise, wird dabei nicht notwendigerweise über die gesamte Zeitdauer einer Entlastungs-Druckstufe eingespeist, sondern zeitlich so definiert, dass das gewünschte hohe Druckpotential in dem der Vorblasstufe zugeordneten Volumen zuverlässig erreicht wird.

Die Lufteinspeisung in das der Vorblasstufe zugeordnete Volumen wird zweckmäßig unter Überwachung des sich dadurch aufbauenden Drucks zeitlich begrenzt, vorzugsweise bis zu einem Druckwert entsprechend etwa dem 2- bis 5-Fachen oder 3- bis 5-Fachen des Vorblasstufen-Drucks.

Bei einer anderen zweckmäßigen Verfahrensvariante wird mit der vorrangigen Einspeisung in das der Vorblasstufe zugeordnete Volumen dort ein Druck aufgebaut, der in einem eine unterkritische Strömung in die Blasform während der Vorblasstufe ausschließenden Verhältnis zum Vorblasstufen-Druck steht. Auf diese Weise wird mit Sicherheit eine unterkritische Strömung in der Vorblasstufe vermieden, bei der sich sonst Schwankungen des Drucks im der Vorblasstufe zugeordneten Volumen in der Blasform auswirken könnten.

Bei einer weiteren, zweckmäßigen Verfahrensvariante wird in der auf die Vorblasstufe folgenden Blasstufe, die eine Zwischenblasstufe ist, mit einem Druck gearbeitet, der etwa nur das 1,5-Fache bis 3-Fache, vorzugsweise etwa das 2-Fache, des Vorblasstufen-Drucks beträgt. In dieser Zwischenblasstufe, die nur bis zu einem relativ geringen Druck durchgeführt wird, wird Energie gespart, und wird der Vorformling, der gegebenenfalls in der Vorblasstufe etwas aufgeblasen und dabei mechanisch gereckt wurde, relativ rasch auf die Größe des Behälters gebracht, ohne jedoch schon dessen Feinheiten auszuprägen. Dies bietet den Vorteil, die nachfolgende höhere Blasstufe nur bis zu einem relativ niedrigen Höchstdruck erfolgen kann, um den Behälter sauber auszuformen und zu stabilisieren. Ein relativ niedriger Höchstdruck spart jedoch erheblich Energie im Blasprozess.

Zweckmäßig wird der Druck in der Blasstufe zum Höchstdruck auf etwa 10 bar bis 35 bar, vorzugsweise 28 bar bis 35 bar, begrenzt, was im Hinblick auf im Stand der Technik übliche Höchstdrücke bis zu 40 bar eine enorme Energieeinsparung erbringt.

Verfahrensgemäß kann Luft aus der jeweiligen Blasform nachrangig in das der Zwischenblasstufe zugeordnete Volumen während wenigstens einer Rückgewinnungsphasen-Druckstufe eingespeist, die zu einem niedrigeren Druck abläuft als die Druckstufe, während welcher vorrangig das der Vorblasstufe zugeordnete Volumen gespeist wurde.

Bei einem Blasformprozess mit drei Blasstufen zu unterschiedlichen hohen Drücken und entsprechend vielen Entlastungs-Druckstufen wird das der Vorblasstufe zugeordnete Volumen nur während der Rückgewinnungsphasen-Druckstufe zum höchsten der niedrigen Drücke gespeist. Die Druckstufe oder Druckstufen zum niedrigeren der niedrigen Drücke kann zum Speisen anderer Volumina oder anderer Verbraucher, z.B. dem Fabrikdruckluftnetz, genutzt werden.

Bei einem Blasformprozess mit vier oder mehr Blasstufen zu unterschiedlich hohen Drücken kann das der Vorblasstufe zugeordnete Volumen vorrangig während einer der höchsten Rückgewinnungsphasen-Druckstufen gespeist werden, und werden nachrangig die nächstniedrigeren Druckstufen zum Speisen anderer Volumina oder anderer Verbraucher benutzt. Die höchste Druckstufe kann zum Speisen des Volumens z.B. der zweiten Blasstufe benutzt werden, die nächstniedrigere zum Speisen des Volumens der Vorblasstufe, und erst die wiederum nächstniedrigere(n) zur Speisung eines Volumens oder der Volumina höherer Blasstufen.

In der Vorrichtung kann eine Drossel stromauf oder stromab des Schaltventils oder im Schaltventil angeordnet sein. Das Schaltventil ist, vorzugsweise, ein 2/2-Wegeschaltventil mit Nocken- oder Magnetbetätigung über die Blassteuerung.

Die Drossel ist, vorzugsweise, eine Verstelldrossel, um den Prozessablauf in der Vorblasstufe individuell auf den jeweiligen Bedarf abstimmen zu können. Die Drossel ist entweder in einem in Strömungsrichtung zur Blasform sperrenden Drosselrückschlagventil angeordnet oder wird durch ein zur Blasform sperrendes, in Strömungsrichtung zum der Vorblasstufe zugeordneten Volumen einen zumindest im Wesentlichen ungedrosselten und großen Querschnitt freigebenden Rückschlagventil umgangen. Dadurch nimmt die für die Vorblasstufe benötigte Drossel keinen Einfluss auf das vorrangige Einspeisen von Luft aus der jeweiligen Blasform in das der Vorblasstufe zugeordnete Volumen, so dass zum Aufbauen des erforderlichen hohen Druckpotentials Drosselverluste vermieden werden und jeweils eine relativ kurze Zeitdauer ausreicht.

Um lange Strömungswege zu den Blasformen zu vermeiden, und dadurch bedingte Strömungsbeeinflussungen, ist es zweckmäßig, wenn die Volumina in einem beim Blasformprozess drehbaren Vorrichtungsteil angeordnet sind. Vorzugsweise haben die Volumina die Form von Ringkanälen, an die die Blasformen der Vorrichtung bequem anschließbar sind. Es können bis zu 50 Blasformen oder mehr in der Vorrichtung verwendet werden.

Um auch beim Anfahren der Vorrichtung bereits optimale Verhältnisse zumindest in der Vorblasstufe zu erzielen, kann es zweckmäßig sein, zwischen der Hauptversorgung mit Druckluft und dem der Vorblasstufe zugeordneten Volumen ein Druckregelventil anzuordnen, das auf in etwa den gleichen Druck wie dem durch das vorrangige Einspeisen von Luft aus der jeweiligen Blasform erzeugbaren Druck eingestellt ist. Dieser Druck kann ein Mehrfaches des Vorblasstufen-Drucks betragen, braucht jedoch, im Regelfall, nur in der Anlaufphase der Vorrichtung aufgebaut zu werden, weil die Vorrichtung zumindest in den Vorblasstufen und gegebenenfalls wenigstens den nächsthöheren Blasstufen dank der Luft-Rückgewinnung aus der stufenweisen Entlastung der Blasform unabhängig von der Hauptversorgung betreibbar ist.

Anhand der Zeichnungen werden Ausführungsformen des Erfindungsgegenstandes erläutert. Es zeigen:
- Fig. 1: ein schematisches Blockschaltbild einer Ausführungsform einer Vorrichtung zum Blasformen von Behältern, insbesondere Kunststoffflaschen aus tempe- rierten Vorformlingen, wobei gestrichelt eine zweite Ausführungsform ange- deutet ist,
- Fig. 2: ein Prozessdiagramm mit zusätzlichen erläuternden Illustrationen zu einem Blasprozess in der in Fig. 1 gezeigten ersten Ausführungsform der Vorrich- tung, und
- Fig. 3: ein schematisches Prozessdiagramm eines Blasprozesses, der in der in Fig. 1 gestrichelt angedeuteten zweiten Ausführungsform der Vorrichtung durchge- führt wird.

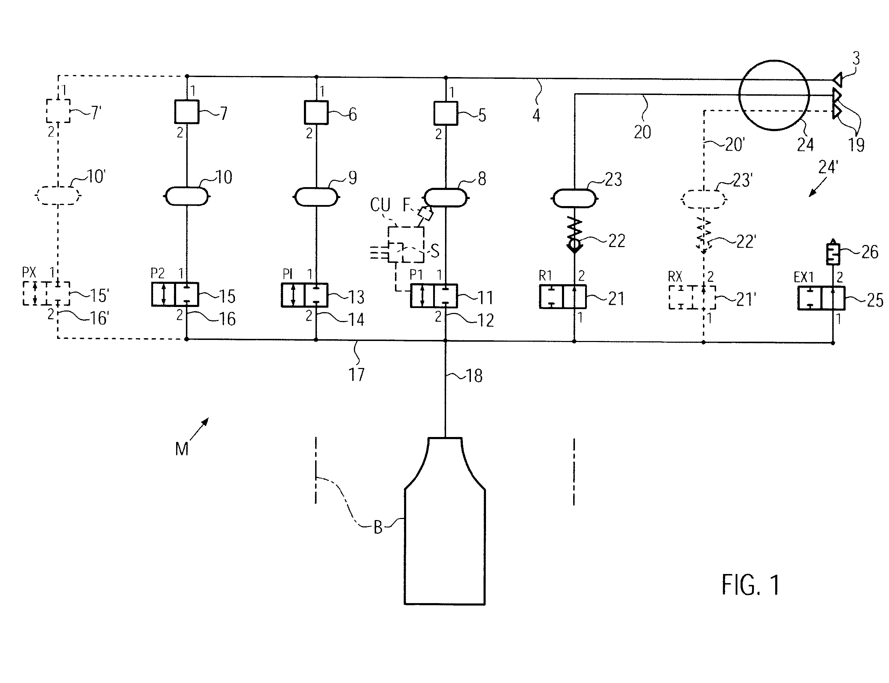

In Fig. 1 weist eine in ausgezogenen Linien gezeigte erste Ausführungsform einer Vorrichtung M (einer Blasformmaschine) eine Hauptversorgung 3, z.B. einen Kompressor oder Druckluftspeicher, auf, der über eine Drehdurchführung 24 an eine Verteilung 4 in einem drehenden Vorrichtungsteil 24' angeschlossen ist. Von der Verteilung 4 zweigen mehrere parallele Leitungen über Druckregelventile 5, 6, 7 zu mehreren Blasstufen zugeordneten Volumina 8, 9, 10 ab. Die Volumina 8, 9, 10 sind zweckmäßig in Form von Ringkanälen im drehenden Vorrichtungsteil 24' vorgesehen, und stehen jeweils getrennt über Schaltventile (2/2-Wegeschaltventile mit mechanischer Betätigung, wie in einer Nockenbetätigung, oder Magnetbetätigung Z) mit einer weiteren Verteilung 17, z.B. Teil eines Verteilerblocks an jeder Station (nicht gezeigt), in Verbindung, an die über eine Leitung 18 jeweils eine Blasform B von mehreren in der Vorrichtung M vorgesehenen Blasformen angeschlossen ist. Es können bis zu 36 oder mehr Blasformen B eingesetzt werden.

Das Druckregelventil 5, das Volumen 8 und das Schaltventil 11 sind beispielsweise einer Vorblasstufe zugeordnet, bei der mit oder bis zu einem Druck P1 gearbeitet wird. Das Druckregelventil 6, das Volumen 9 und das Schaltventil 13 sind einer weiteren Blasstufe, hier einer Zwischenblasstufe, bis zu einem Druck Pi zugeordnet. Das Druckregelventil 7, das Volumen 10 und das Schaltventil 15 sind schließlich einer weiteren Blasstufe, zu einem höheren Druck P2 als dem Druck Pi und dem Druck P1 zugeordnet. Zumindest bei dem Schaltventil 11 ist eine Drossel 12 vorgesehen, die stromauf oder stromab des oder im Schaltventil 11 angeordnet sein kann. Die Drossel 12 für die Vorblasstufe ist entweder in einem Drosselrückschlagventil 12' angeordnet, oder durch ein Rückschlagventil 12' umgehbar, das in Strömungsrichtung zur Blasform B sperrt und in Strömungsrichtung zum Volumen 8 einen im Wesentlichen ungedrosselten und großen Querschnitt freigibt. Optional könnten auch bei den Schaltventilen 13, 15 Drosseln 14, 16 vorgesehen sein.

Eine programmierbare oder programmierte elektronische Blassteuerung CU dient zum Steuern des Blasprozesses und zumindest der Schaltventile 11, 13, 15. Die Blassteuerung CU enthält z.B. eine Programmsektion S, die beim Blasprozess in einer Rückgewinnungsphase Luft aus der jeweiligen Blasform B vorrangig bzw. zuerst in das der Vorblasstufe zugeordnete Volumen 8 über das Schaltventil 11 und das Rückschlagventil 12' einspeist, ehe z.B. auch Luft aus der Blasform B über die Verteilung 17 und das Schaltventil 13 nachrangig auch in das Volumen 9 eingespeist wird. Zumindest für das Volumen 8 ist eine Drucküberwachungseinrichtung F, z.B. ein Drucksensor oder Druckmesser, vorgesehen, der mit der Blassteuerung CU in signalübertragender Verbindung steht und den Druck oder das Druckpotential im Volumen 8 überwacht, damit die Blassteuerung CU in der Rückgewinnungsphase der Blasform B druckabhängig die Zeitdauer bis zum Erreichen des gewünschten Druckpotentials oder Drucks im Volumen 8 exakt einstellen kann, während welcher das Schaltventil 11 auf Durchgang gestellt wird.

An die Verteilung 17 ist ferner eine Leitung 20 zu einem Verbraucher 19 angeschlossen, der beispielsweise eine Reckvorrichtung für die jeweilige Blasform B oder das Druckluftnetz der Fabrikationsstätte ist, aus dem beispielsweise der Kompressor der Hauptversorgung 3 gespeist werden kann. In der Leitung 20 sind ein Schaltventil 21, ein diesem zugeordnetes, in Strömungsrichtung zur Verteilung 17 sperrendes Rückschlagventil 22 und ein weiteres Volumen 23 angeordnet. Ferner ist an die Verteilung 17 ein Schaltventil 25 mit einem Abluftschalldämpfer 26 in die Atmosphäre angeschlossen.

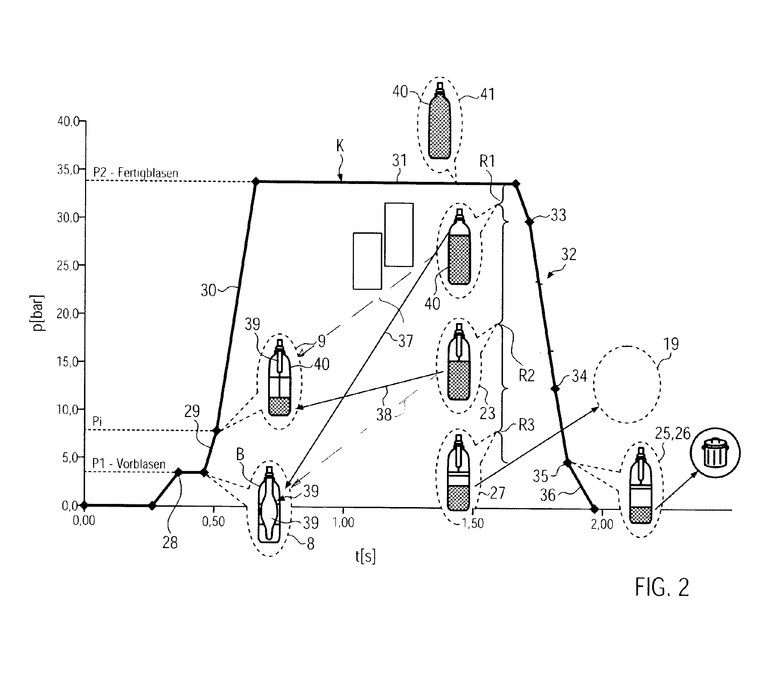

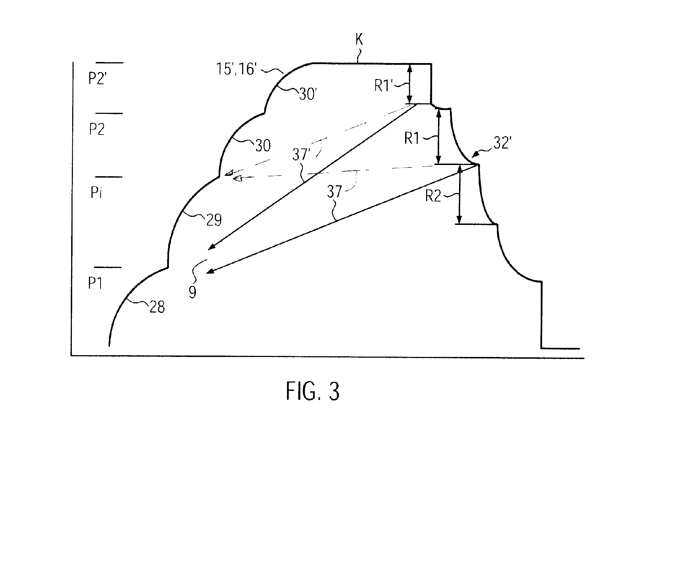

In der anhand Fig. 1 bislang erläuterten Ausführungsform der Vorrichtung M wird beispielsweise der in Fig. 2 gezeigte Blasprozess ausgeführt, der in der Blasform B mittels der Schaltventile 11, 13, 15, 21 und 25 mit drei Blasstufen (Vorblasstufe 28, Zwischenblasstufe 29 und höchster Blasstufe 30) sowie einer Rückgewinnungsphase 32 in mehreren Druckstufen R1, R2, R3 gesteuert wird. Bei 36 wird in die Atmosphäre abgeblasen In Fig. 1 ist in gestrichelten Linien ferner eine zweite Ausführungsform der Vorrichtung M angedeutet, mit der der in Fig. 3 gezeigte Blasprozess mit vier (oder mehr) Blasstufen (Vorblasstufe 28, Zwischenblasstufe 29, höhere Blasstufe 30, Endblasstufe 30', jeweils mit unterschiedlich hohen Drücken P1, Pi, P2, P2') und einer Rückgewinnungsphase 32 mit beispielsweise insgesamt fünf Druckstufen R1', R1, R2, etc. zu jeweils unterschiedlich niedrigen Drücken durchführbar ist. In der zweiten Ausführungsform sind ein weiteres Schaltventil 15' (optional mit einer Drossel 16'), einem zugeordneten Volumen 10' und einem Druckregelventil 7' für die höchste Blasstufe 30' in Fig. 3 vorgesehen. Zum Verbraucher 19 zweigt eine weitere Leitung 20' von der Verteilung 17 ab, in der ein Schaltventil 21', ein Rückschlagventil 22' und ein weiteres Volumen 23' vorgesehen sind.

Das Prozessdiagramm in Fig. 2 zeigt in einer Kurve K den Druckverlauf in der Blasform B über der Zeit. Die Vorblasstufe 28 wird durch Umschalten des Schaltventils 11 in Fig. 1 aus der gezeigten Absperrstellung in die Durchgangsstellung gesteuert, erstreckt sich über eine vorbestimmte Zeitdauer, und endet mit konstant gehaltenem Vorblasstufen-Druck P1. Dann wird das Schaltventil 11 wieder in die Absperrstellung gebracht. In der Vorblasstufe wird ein in die Blasform B eingebrachter, ein bestimmtes Temperaturprofil aufweisender Vorformling P geringfügig aufgeblasen und, vorzugsweise, dabei mechanisch durch eine Reckstange 39 in Axialrichtung gereckt. Der Vorformling P hat nach der Vorblasstufe 28 die Innenwand der Blasform B noch nicht vollständig erreicht, oder überhaupt noch nicht.

Die Zwischenblasstufe 29 wird durch Umschalten des Schaltventils 13 aus der gezeigten Absperrstellung in die Durchgangsstellung mit Luft aus dem Volumen 9 gestartet. In der Zwischenblasstufe 29 wird über eine vorbestimmte Zeitdauer bis zu dem Druck Pi der Vorformling P weitestgehend in die Größe eines zu formenden Behälters 40 gebracht, ohne endgültige Feinheiten auszuprägen. Sobald der Druck Pi in der Blasform B erreicht ist, wird das Schaltventil 13 in die gezeigte Absperrstellung gestellt. Die nachfolgende Blasstufe 30 wird durch Umschalten des Schaltventils 15 aus der gezeigten Absperrstellung in die Durchgangsstellung von Fig. 1 begonnen und bis zum Erreichen des Drucks P2 (Fertigblasen) über eine vorbestimmte Zeitdauer durch die Blassteuerung CU durchgeführt. Der Druck P2 wird dann entlang eines Kurventeils 31 aufrechtgehalten, wobei darauf hinzuweisen ist, dass hier der Druck P2 relativ niedrig sein und bei oder unterhalb von 30 bar liegen kann. Mit Ende des Kurventeils 31 (nach einer vorbestimmten Zeitdauer der Blasstufe 30) wird das Schaltventil 15 wieder in die gezeigte Absperrstellung gestellt. Der Behälter 40 ist fertig.

Nun folgt für diese Blasform B eine Rückgewinnungsphase 32 mit mehreren Druckstufen R1, R2, R3, und schließlich bei 36 bis zum drucklosen Zustand. In der Druckstufe R1 wird durch Umstellen zuerst des Schaltventils 11 aus der gezeigten Absperrstellung von Fig. 1 in die Durchgangsstellung Luft aus der Blasform B bzw. dem Behälter 40 über das öffnende Rückschlagventil 12' in das der Vorblasstufe zugeordnete Volumen 8 eingespeist, z.B. bis dort ein Druck von etwa 16 bar bis 22 bar, aufgebaut ist. In Fig. 2 erfolgt dies während der Druckstufe R1 zu einem Druck 33, hier beispielsweise von etwa 30 bar, wie dies durch den Pfeil 37 angedeutet ist. Dann wird das Schaltventil 11 wieder in die in Fig. 1 gezeigte Absperrstellung gestellt. Erst nachfolgend wird das Schaltventil 13 aus der in Fig. 1 gezeigten Absperrstellung in die Durchgangsstellung gestellt und wird während der nächstniedrigeren Druckstufe R2 bis zu einem Druck 34 von hier etwa 13 bar Luft aus der Blasform B in das Volumen 9 eingespeist, wie durch den Pfeil 38 angedeutet ist. Wie die Pfeile 37, 38 zeigen, wird hier sozusagen die Zwischenblasstufe 29 bei der Speisung des Volumens 8 "übersprungen", d.h. es wird hier auf andere Weise gespeist, als im Stand der Technik, wo stets in die nächstniedrigere Stufe eingespeist wird.

Die Einspeisung von Luft aus der Blasform B in das Volumen 8 bzw. das Volumen 9 braucht nicht notwendigerweise über die gesamte Zeitdauer der jeweiligen Druckstufe R1, R2 durchgeführt werden, sondern wird zweckmäßig zeitlich so begrenzt, dass in dem jeweiligen Volumen 8, 9 gerade ein vorbestimmter optimaler Druck aufgebaut wird. In der nächstniedrigeren Druckstufe R3 wird beispielsweise über das Schaltventil 21 Luft aus der Blasform in das weitere Volumen 23 für den weiteren Verbraucher 19 gespeist, bis zu einem Druck 35 von hier etwa 5 bar. Zuletzt wird bei 36 schließlich Restluft aus der Blasform B durch Betätigen des Schaltventils 25 über den Abluftschalldämpfer 26 in die Atmosphäre abgeblasen. Entlang des Kurventeils 31 wird der Behälter 40 endgültig geprägt und, wie durch 41 angedeutet, stabilisiert.

In der Vorblasstufe 28 wird bereits weitestgehend die endgültige Verteilung der Segmentgewichte bzw. des Materials im Vorformling P für die endgültige Ausprägung 41 des Behälters 40 erzeugt, gegebenenfalls noch ergänzt in der Zwischenblasstufe 29. Bei den Blasprozessen in den weiteren Blasformen B wird zeitlich versetzt gleich gearbeitet, so dass das Volumen 8 zyklisch gespeist wird. Obwohl im Volumen 8 u.a. durch die zyklischen Lufteinspeisungen unvermeidlich Druckschwankungen auftreten, wird das durch das vorrangige Einspeisen von Luft in das Volumen 8 dort ein ausreichend hohes Druckpotential geschaffen, mit dem über die Drossel 12, die relativ klein ausgebildet sein kann, sehr gleichbleibende Vorblasstufen-Konditionen im Hinblick auf den Druck P1 und die jeweilige Menge an Vorblasluft für jede Vorblasstufe erzielt, weil sich dank des hohen Druckpotentials im Volumen 8 über die kleine Drossel 12 die unvermeidbaren Fluktuationen nicht in der Blasform B auswirken können, und die Wahrscheinlichkeit einer unterkritischen Strömung sehr gering bis nicht existent ist.

Bei dem in Fig. 3 dargestellten Blasprozess resultiert die Kurve K auch aus den in Fig. 1 gestrichelten Komponenten der zweiten Ausführungsform. Es wird hier mit mindestens vier Blasstufen bis zu einem Druck P2' z.B. von nur etwa 35 bar gearbeitet, und wird die Rückgewinnungsphase 32' in z.B. fünf Druckstufen gesteuert. Wie durch die Pfeile 37 oder 37' angedeutet, wird Luft aus der Blasform B entweder während der höchsten Druckstufe R1' oder der nächstniedrigeren Druckstufe R1 in das Volumen 8 eingespeist, die der Vorblasstufe zugeordnet ist, um das vorerwähnte hohe Druckpotential oder einen ausreichend hohen Druck im Volumen 8 zu erzeugen, mit dem weitestgehend gleichförmige Vorblasstufen-Konditionen erzielbar sind. Gegebenenfalls wird entsprechend dem Pfeil 37' zunächst das Volumen 9 und erst dann (Pfeil 37) das Volumen 8 gespeist. In jedem Fall wird das Volumen 8 gespeist, ehe ein Volumen für eine noch höhere Blasstufe, z.B. 30' gespeist wird. Die höchste Blasstufe 30' wird durch Umstellen des Schaltventils 15' in Fig. 1 aus der gezeigten Absperrstellung in die Durchgangsstellung gesteuert. Die ersten und zweiten Druckstufen R1', R1 der Rückgewinnungsphase 32' werden z.B. durch Betätigen des Schaltventils 11 und/oder 13 gesteuert, während die nächstniedrigere Druckstufe R2 z.B. durch Betätigen des Schaltventils 15 gesteuert werden kann. Die weiteren Druckstufen und das Abblasen bei 36 können entweder durch Betätigen des Schaltventils 15' oder des Schaltventils 21 bzw. 21' gesteuert werden.

Die Druckregelventile 5, 6, 7, 7' sind auf den jeweils in den Volumina 8, 9, 10, 10' für den Blasprozess erforderlichen Drücke eingestellt. Beispielsweise ist das Druckregelventil 5 für das Volumen 8 für die Vorblasstufe 28 auf einen Druck um etwa 20 bar eingestellt, entsprechend dem durch das vorrangige Einspeisen von Luft aus der Blasform B im Volumen 8 aufgebauten Druck. Zum Anfahren der Vorrichtung M wird für alle Volumina 8, 9, 10, 10' die Hauptversorgung 3 herangezogen.

Die Erfindung soll auch umfassen, das Volumen 8 für die Vorblasstufe vorrangig zur Speisung eines Volumens für wenigstens eine höhere Blasstufe zu speisen, d.h., zur Speisung des Volumens 8 keinesfalls die niedrigste nutzbare Druckstufe der Rückgewinnungsphase heranzuziehen, sondern stets zumindest die Speisung des Volumens einer höheren Blasstufe zu überspringen. Dies kann bedeuten, dass z.B. das Volumen 8 oder das Volumen 9 als erstes gespeist wird, das Volumen 10 jedoch erst nach dem Volumen 8.

## Patentansprüche

1. Verfahren zum Blasformen von Behältern (40) in Blasformen (B) einer mit Rückgewinnung von Blasluft aus den Blasformen betriebenen Vorrichtung (M), wobei aufeinanderfolgend in einer Vorblasstufe (28) mit einem niedrigen Druck (P1) und mindestens zwei weiteren Blasstufen (29, 30, 30') mit jeweils höheren Drücken (Pi, P2, P2') gearbeitet und nachfolgend in einer Rückgewinnungsphase (32) in aneinander anschließenden Druckstufen (R1 - R3) zu jeweils unterschiedlich niedrigen Drücken (33, 34, 35) Luft aus der Blasform (B) in getrennte, jeweils allen Blasformen (B) gemeinsame Volumina (8, 9) eingespeist wird, **dadurch gekennzeichnet, dass** in der Rückgewinnungsphase (32, 32') zeitlich gesehen zuerst Luft aus der Blasform (B) in wenigstens ein Volumen (8, 9) eingespeist wird, das einer niedrigen Blasstufe (28, 29) zugeordnet ist, und anschließend Luft in ein Volumen eingespeist wird, das einer höheren Blasstufe zugeordnet ist.

2. Verfahren nach Anspruch 1, **dadurch gekennzeichnet, dass** in der Rückgewinnungsphase (32, 32') Luft aus der jeweiligen Blasform (B) vorrangig einer gegenüber einer Einspeisung zumindest in eines der auf die Vorblasstufe (28) folgenden oder noch höheren Druckstufe (29, 30, 30') zugeordnete Volumen (9) zuerst in das der Vorblasstufe (28) zugeordnete Volumen (8) eingespeist, und, vorzugsweise, dort ein gegenüber dem Druck (P1) höheres, vorzugsweise mindestens doppelt so hohes, Druckpotential aufgebaut wird.

3. Verfahren nach Anspruch 1, **dadurch gekennzeichnet, dass** Luft aus der jeweiligen Blasform (B) in das der Vorblasstufe (28) zugeordnete Volumen (8) zumindest während der Rückgewinnungsphasen-Druckstufe (R1) zu dem höchsten niedrigen Druck (33) eingespeist wird, oder vorzugsweise, während der Rückgewinnungsphasen-Druckstufe (R2) zu dem nächstniedrigeren Druck (34).

4. Verfahren nach Anspruch 1, **dadurch gekennzeichnet, dass** die vorrangige Lufteinspeisung zumindest in das der Vorblasstufe (28) zugeordnete Volumen (8) unter Überwachung des in dem Volumen (8) entstehenden Drucks zeitlich begrenzt wird, vorzugsweise bis zu einem Druckwert entsprechend etwa dem 2- bis 5-Fachen, vorzugsweise 3- bis 5-Fachen des Drucks (P1).

5. Verfahren nach Anspruch 1, **dadurch gekennzeichnet, dass** durch vorrangige Lufteinspeisung in das der Vorblasstufe zugeordnete Volumen (8) dort ein Druck aufgebaut wird, der zum Druck (P1) in einem eine kritische Strömung in die Blasform (B) während der Vorblasstufe (28) zumindest weitestgehend ausschließbaren Verhältnis steht.

6. Verfahren nach wenigstens einem der vorhergehenden Ansprüche, **dadurch gekennzeichnet, dass** in der auf die Vorblasstufe (28) folgenden Blasstufe (29), die eine Zwischenblasstufe ist, mit einem Druck (Pi) gearbeitet wird, der etwa das 1,5-Fache bis 3-Fache, vorzugsweise etwa das 2-Fache, des Drucks (P1) beträgt, und über eine Zeitdauer kürzer als die Zeitdauer der Vorblasstufe (28).

7. Verfahren nach wenigstens einem der vorhergehenden Ansprüche, **dadurch gekennzeichnet, dass** der Druck (P2, P2') in der Blasstufe (30, 30') auf etwa 10 bar bis 35 bar, vorzugsweise 28 bar bis 35 bar, begrenzt wird.

8. Verfahren nach wenigstens einem der vorhergehenden Ansprüche, **dadurch gekennzeichnet, dass** das der Zwischenblasstufe (29) zugeordnete Volumen (9) während wenigstens einer Rückgewinnungsphasen-Druckstufe (R2) gespeist wird, die zu einem nächstniedrigeren Druck (34) führt als die Druckstufe (R1, R1'), während welcher das der Vorblasstufe zugeordnete Volumen (8) gespeist wurde.

9. Verfahren nach wenigstens einem der vorhergehenden Ansprüche, **dadurch gekennzeichnet, dass** beim Blasformen in drei Blasstufen (28, 29, 30) mit Drücken (P1, Pi, P2) das der Vorblasstufe (28) zugeordnete Volumen (8) nur während der Rückgewinnungsphasen-Druckstufe (R1) zum höchsten niedrigen Druck (33) vorrangig gespeist wird.

10. Verfahren nach wenigstens einem der vorhergehenden Ansprüche, **dadurch gekennzeichnet, dass** beim Blasformen in mindestens vier Blasstufen (28, 29, 30, 30') mit Drücken (P1, Pi, P2, P2') das der Vorblasstufe (28) zugeordnete Volumen (8) während einer der zwei höchsten Rückgewinnungsphasen-Druckstufen (R1', R1) vorrangig gespeist wird.

11. Vorrichtung (M) zum Blasformen von Behältern (40) in Blasformen (B), die mit Rückgewinnung von Luft aus den Blasformen betrieben wird, mit jeweils allen Blasformen (B) gemeinsamen, getrennten und an eine Hauptversorgung (3) anschließbaren Volumina (8, 9, 10, 10'), die einer Vorblasstufe (28) und zumindest zwei weiteren Blasstufen (29, 30, 30') zugeordnet sind, und mit wahlweise betätigbaren Schaltventilen (11, 13, 15, 15') zwischen einem Volumen (8, 9, 10, 10') und jeder Blasform (B), und mit einer programmierbaren elektronischen Blassteuerung (CU) und einer Drucküberwachungseinrichtung (F) zumindest für den in dem der Vorblasstufe (28) zugeordneten Volumen (8) herrschenden Druck, **dadurch gekennzeichnet, dass** die Blassteuerung (CU) eine Programmsektion (S) zum gegenüber einer höheren Blasstufe (29 oder 30) vorrangigen Einspeisen von Luft aus der jeweiligen Blasform (B) in das der Vorblasstufe (28) zugeordnete Volumen (8) und zum Aufbauen eines gegenüber dem Druck (P1) höheren Drucks in dem der Vorblasstufe (28) zugeordneten Volumen (8).

12. Vorrichtung nach Anspruch 11, **dadurch gekennzeichnet, dass** stromauf oder stromab des Schaltventils (11) oder im Schaltventil (11), vorzugsweise einem 2/2-Wegeschaltventil mit Nocken- oder Magnetbetätigung (Z) über die Blassteuerung (CU) eine Drossel (12) angeordnet ist.

13. Vorrichtung nach Anspruch 12, **dadurch gekennzeichnet, dass** die Drossel (12), vorzugsweise eine Verstelldrossel, entweder in einem in Strömungsrichtung zur Blasform (B) sperrenden Drosselrückschlagventil (12') angeordnet oder durch ein zur Blasform (B) sperrendes, in Strömungsrichtung zum der Vorblasstufe zugeordneten Volumen (8) einen zumindest im Wesentlichen ungedrosselten und großen Querschnitt freigebendes Rückschlagventil (12') umgehbar ist.

14. Vorrichtung nach Anspruch 11, **dadurch gekennzeichnet, dass** die Volumina (8, 9, 10, 10') in einem beim Blasformprozess drehbaren Vorrichtungsteil (24') angeordnet sind, vorzugsweise in Form von Ringkanälen.

15. Vorrichtung nach Anspruch 11, **dadurch gekennzeichnet, dass** zwischen der Hauptversorgung (3) und dem der Vorblasstufe (28) zugeordneten Volumen (8) ein Druckregelventil (5) angeordnet ist, das auf in etwa den gleichen Druck wie dem durch das vorrangige Einspeisen von Luft aus der Blasform (B) in dieses Volumen (8) erzeugbaren Druck eingestellt ist.
